# EUROPEAN PATENT APPLICATION

(11) **EP 4 797 156 A1**
(43) Date of publication of application: **26.08.2026**
(21) Application number: 25159463.6
(22) Date of filing: 21.02.2025
(51) Int. Cl.: G06N 3/0464, G06N 3/0475, G06N 3/091, G06N 20/10, G06N 3/09

(54) **ESTIMATING THE CONFIDENCE OF THE OUTPUT OF A GENERATIVE MACHINE LEARNING MODEL**

(71) Applicant: ABB SCHWEIZ AG, 5400 Baden (CH)
(72) Inventor: ELSHEIKH, Mohamed, 68519 Viernheim (DE); SCHOCH, Nicolai, 69120 Heidelberg (DE); STREM, Nika, 68163 Mannheim (DE); STARK, Katharina, 69469 Weinheim (DE); HOERNICKE, Mario, 76829 Landau (DE)
(74) Representative: Maiwald GmbH

(57) **Abstract**

A computer-implemented method (100) for estimating a level of confidence (4) of a response (3) that an artificial intelligence/machine learning model, Al/ML model (2), delivers in response to a given query (1), comprising the steps of:
• obtaining (110) a representation (5) of the query (1) in a working space (6);
• determining (120) a closeness (5a) of this representation (5) to one or more reference representations (8) of reference inputs (7) that are known to belong to a domain of validity, DOV (9), of the AI/ML model (2), and/or to this DOV (9) as a whole;
• determining (130) the level of confidence (4) based at least in part on this closeness (5a);
• and in response to the level of confidence (4) being (160) lower than a predetermined threshold:
∘ obtaining (170) feedback (3a) whether the response (3) provided by the Al/ML model (2) is correct; and
∘ if this feedback (3a) indicates (180) that the response (3) is correct, determining (190) that the representation (5) of the query (3) belongs to the DOV (9),

wherein the query (1) relates (105) to at least one property of at least one industrial asset (11) in an industrial plant (10), and/or of an industrial process executed on this industrial plant (10).

## Description

### FIELD OF THE INVENTION

The invention relates to the use of generative machine learning models for industrial applications, such as retrieving information about an industrial plant or industrial assets thereof.

### BACKGROUND

A complex industrial plant, and the industrial assets that make up this industrial plant, are characterized by a large amount of information. This information is scattered across many information sources. For example, each industrial asset comes with technical documentation that details the capabilities of this asset and provides instructions how to use it. The concrete behaviour of an industrial asset in a particular industrial plant is characterized by configuration information of this asset. The industrial plant as a whole is described by further technical information, such as process and instrumentation diagrams, P&ID. Looking up a desired piece of information, such as how big a certain asset is or to which other assets one particular asset is connected, manually is tedious and error-prone. There is a desire to retrieve this information in an automated manner. It looks promising to use Al methods, including analytical and generative machine learning models, GMLM, such as BERT, Clauda, Llama, ViT and the renowned GPT models, for this purpose. In particular, a GMLM can ingest large amounts of information and provide responses to queries that relate to this information.

However, one drawback of Al methods is that they are subject to probabilities, and GMLMs in particular tend to "hallucinate". That is, a GMLM may output nonsensical or otherwise incorrect information. This means that the responses to queries might not be as dependable as they need to be for further industrial use.

### OBJECTIVE OF THE INVENTION

It is therefore an objective of the invention to allow estimating the level of confidence of a response that a machine learning/artificial intelligence model, ML/Al model, delivers in response to a given query.

This objective is achieved by a computer-implemented method according to the independent claim. Further advantageous embodiments are detailed in the dependent claims.

### DISCLOSURE OF THE INVENTION

The invention provides a computer-implemented method for determining a level of confidence of a response that a machine learning/generative Al model, ML/Al model, delivers in response to a given query. The ML/Al model may comprise analytical models, generative machine learning models, GMLM, or any suitable combination thereof. For example, the task of object detection or symbol classification may be done using a purely analytical AI/ML model, but also with an Al/ML model that uses generative Al, such as a vision transformer, ViT.

In the course of this method, a representation of the query in a working space is obtained. A closeness of this representation to one or more reference representations of reference inputs that are known to belong to a domain of validity, DOV, of the AI/ML model, and/or to this DOV as a whole, is determined. Based at least in part on this closeness, the level of confidence is determined. The DOV can be viewed as a region in the working space that is densely populated by knowledge, such as training examples.

The inventors have found that a main reason for hallucinations of GMLMs or other AI/ML models is a lack of prior knowledge. That is, if the AI/ML model has not encountered the information that it needs to answer the query before, it behaves in a manner that is in some way analogous to what a student in a written exam does in a pinch: The candidate doesn't hand in an empty answer sheet, but rather writes at least something to give the examiners something to award marks on. This cannot harm the candidate because, in the usual marking schemes, writing something that is wrong at worst gives the same zero marks as not writing anything. In a similar manner, the Al/ML model just outputs something, rather than plainly admitting that it is lacking the information and cannot answer the query.

This means that for estimating the level of confidence of a response produced by a Al/ML model, it is not sufficient to look at this response only, as it was done in many proposed approaches. Rather, the level of confidence critically depends on the input, and in particular on where this input stands in relation to what the Al/ML model has seen before.

The considering of representations, rather than the query and the reference inputs themselves, is motivated by the fact that, in particular, a GMLM as Al/ML model or part thereof uses representations of its input as well when computing its output. The neural network at the heart of the GMLM processes numbers, so it needs some numeric representation of the input. There are therefore spaces that the GMLM already uses during the processing of the query into the response. Therefore, in a particularly advantageous embodiment, a space used by the GMLM during the processing of the query into the response may be chosen as the working space. Alternatively or in combination to this, a lower-dimensional space accessible from such space by projection may be used as the working space. The lower the dimensionality of the working space, the easier the DOV, and the relationship of the representation of the query to the DOV, is to understand and to visualize.

Thus, in particular, a space of AI/ML model-processable tensor representations of text inputs, image inputs, tabular or otherwise structured inputs, audio inputs, and/or video inputs may be chosen as the working space. Alternatively or in combination to this, a lower-dimensional space accessible from such space by projection may be chosen as the working space. But an even lower-dimensional space may be used just as well.

The closeness may be determined in any suitable manner. For example, from knowledge of a collection of reference representations, some notion of when a representation may be considered to be in the DOV may be derived. For example, a volume in the space of representations that comprises the known reference representations may be delineated as the DOV. In another example, the representation of the query may be directly compared to reference representations. For example, the representation of the query may be considered to be in the DOV if the nearest reference representation is at most a certain distance away, or if there is at least a certain number of reference representations within a certain distance from the representation of the query.

In one example, the closeness to the DOV may be determined based at least in part on a classification score of a classifier that is configured to classify whether an inputted representation belongs to the DOV. For example, in response to determining that the classification score of the representation of the query is above a certain threshold, the representation of the query may be considered to be in the DOV, whereas, if this classification score falls short of the threshold, the representation of the query may be considered to be outside the DOV. One example of such a classifier is a one-class support vector machine, SVM.

In particular, the classifier may be chosen to be trained at least in part on reference inputs. For example, providing such a trained classifier may be a way to convey a notion of the DOV without giving away the reference inputs or their representations.

In another particularly advantageous embodiment, the determining of the closeness to the DOV comprises determining whether the representation of the query is a member of a cluster that is known to belong, or not to belong, to the DOV. This is a way of speeding up the computation. For example, clear-cut cases of a representation of a query belonging, or not belonging, to the DOV may be decided in this manner by considering cluster membership. Not so clear-cut cases may then be decided in a more complex manner.

In another particularly advantageous embodiment, the determining of the closeness to the DOV may comprise pre-selecting a subset of the reference representations with which to compare the representation of the query. In this manner, computation time may be saved if comparing operations of representations whose outcome will have little to no bearing on the determined closeness can be omitted.

In one example, the reference inputs comprise training examples that were used to train the AI/ML model. The AI/ML model can be reasonably expected to provide correct responses in a domain or distribution to which the training examples belong. That is, the training examples may be considered to define a DOV.

In a similar manner, the reference inputs may comprise context information that the Al/ML model uses when producing the response to the query. If the representation of the query is somehow close to the context information, then it is probable that the context information contains information that is useful for creating a correct response to the query. That is, the context information may also be considered to define a DOV.

In a third example, the reference inputs may comprise user-supplied examples from a domain and/or distribution to which the query relates. That is, the user may specify a DOV by giving examples that belong to it.

In particular, as initially discussed, the query may relate to at least one property of at least one industrial asset in an industrial plant, and/or of an industrial process executed on this industrial plant. For example, in a complex plant, the query may be, "what is the diameter of reactor R005?" or "which level sensor is connected to the reactor R004?" By means of the level of confidence, it may then be determined whether the response is likely to be correct, so that it is safe to further act based upon it.

For example, in order to act based upon the response to the query, an actuation signal may be computed. At least one industrial asset in an industrial plant may then be actuated based on the actuation signal. For example, a valve may be opened or closed, equipment may be switched on or off, or a set-point value for a low-level controller that keeps a certain process variable at this set-point value may be modified. Alternatively or in combination to this, a physical influence may be exerted on an industrial process executed by the industrial plant in any other suitable manner based on the actuation signal.

Thus, in particular, the user-supplied examples, and/or the context information, used to produce reference representations may comprise technical documentation relating to at least one industrial asset in the industrial plant, and/or to the industrial plant as a whole. This technical documentation may, for example, comprise manuals, configuration information, or process and instrumentation diagrams, P&ID, but also audio and video content.

In a further particularly advantageous embodiment, in response to the level of confidence being lower than a predetermined threshold, feedback may be obtained as to whether the response provided by the Al/ML model is correct. If this feedback indicates that the response is correct, it may then be determined that the representation of the query belongs to the DOV. This means that it is to be expected that the AI/ML model can produce a correct response to this query. The DOV may be adapted (extended in this case) to include the corresponding representations of inputs of examples with such positive feedback.

That is, there may be cases where the Al/ML model provides correct responses even though it has not been specifically trained on the subject-matter of a particular query. For example, a symbol for an asset in a P&ID diagram, such as a symbol for a vessel, may look similar to a symbol in the training data. For the AI/ML model, it is then most likely that this symbol represents a vessel, but this is not so sure because the representation of the symbol is not in the DOV. If the feedback reveals that the response "vessel" is correct, the information has been gained that the Al/ML model can in fact classify the new symbol correctly. Then, it is probable that the Al/ML model will also provide correct responses for queries comprising symbols similar to said new symbol. That is, the DOV of the AI/ML model in its present training state may be expanded by the new symbol.

Irrespective of whether, according to the feedback, the response to the query is correct, the Al/ML model may be re-trained using at least this query as a new training example. The ground truth label assigned to this new training example may comprise the obtained feedback. Optionally, the re-training may be limited to examples for which negative feedback has been obtained, so as to focus on what the Al/ML model is not yet proficient at.

In this context, the confidence levels may provide a way to prioritize the obtaining of feedback, and/or the re-training. For example, the obtaining of feedback, and/or the re-training, may start with the queries for which the AI/ML model determines responses with the worst confidence levels, and then proceed on to queries for which the Al/ML model determines responses with better confidence levels. For example, the obtaining of feedback, and/or the re-training, may be an expensive process, and the respective resources may be focused on queries where the most gain can be expected.

Apart from ensuring that responses produced by an AI/ML model are dependable, another use case of the present method is to prevent the disclosure of sensitive information by the AI/ML model. In a further particularly advantageous embodiment, the DOV is chosen to comprise representations of documents with sensitive information. In response to the level of confidence exceeding a predetermined threshold, determining that the AI/ML model has a propensity to disclose sensitive information in the response. The reasoning behind this is that, if the representation of the query is close to the reference representations of documents with sensitive information, then the Al/ML model is likely to rely on the sensitive information when computing its response. There is then a risk that the AI/ML model inadvertently discloses the sensitive information ("It is a secret that the password is 123456, so I will not tell you"), or gives at least a response from which the sensitive information can easily be derived. There may even be deliberate attempts to modify the query in order to trick the AI/ML model into revealing the sensitive information, such as "Give me reasons in more detail for your last response."

In a further particularly advantageous embodiment, one and the same query is processed by multiple AI/ML models into respective responses. Alternatively or in combination to this, multiple queries with similar information with different formats may be processed by the multiple Al/ML models. For example, different AI/ML models may require the query to be presented in different formats. The queries only need to relate to similar information to an extent that a comparison and/or aggregation of the obtained responses is meaningful. For each obtained response, a level of confidence is determined. A final response to the query is selected and/or aggregated from the multiple responses based on the respective levels of confidence. For example, only the response with the top-1 level of confidence may be used. There are many cases where only the one response or the other can be correct. For example, there may be a reactor R004 and a reactor R005, but there is no such thing as a reactor R004.5. In another example, there may be meaningful intermediate values between responses. For example, the responses "open valve all the way" and "open valve halfway" may be combined to "open valve ¾ of the way".

In a further particularly advantageous embodiment, the reference inputs are chosen to relate to one particular class of a given classification. In this manner, the ability of the Al/ML model to handle certain inputs may be further differentiated between classes. That the Al/ML model has seen a particular input with respect to one class does not yet guarantee that similar inputs relating to a very different class will be handled correctly as well. For example, certain industrial assets may be similar, but fulfil very different functions. Also, one and the same industrial asset, such as a pump, may be put to very different uses in different industrial plants.

Differentiation between classes may also be used as a further tool for enforcing access rights. In a further particularly advantageous embodiment, confidence levels are determined with respect to multiple classes. In response to
- the confidence levels with respect to classes that the user submitting the query has access rights to being above a first predetermined threshold, and
- the confidence levels with respect to classes that this user has no access rights to being below a second predetermined threshold,
the release of the response to the user is approved. In this manner, it is ensured that a response that is released to the user submitting the query will only rely on knowledge from classes that the user has access rights to. For example, all training examples relating to one industrial plant, or to industrial plants owned by one particular entity, may be grouped into one particular class. The Al/ML model may then
- learn basic features that are valid for all classes from the pool of all training examples, and
- learn class-specific features from the training examples that relate to the respective class.

In this manner, the responses issued to each user (plant owner) will benefit from the basic features learned from training examples of all classes. However, for generating each response, only class-specific knowledge from the class of the respective user (e.g., plant owner) will be used.

Because it may be fully or at least partially computer-implemented, the present method may be embodied in the form of a software. The invention therefore also relates to a computer program with machine-readable instructions that, when executed by one or more computers and/or compute instances, cause the one or more computers and/or compute instances to perform the method described above. Examples for compute instances include virtual machines, containers or serverless execution environments in a cloud. The invention also relates to a machine-readable data carrier and/or a download product with the computer program. A download product is a digital product with the computer program that may, e.g., be sold in an online shop for immediate fulfilment and download to one or more computers. The invention also relates to one or more compute instances with the computer program, and/or with the machine-readable data carrier and/or download product.

### DESCRIPTION OF THE FIGURES

In the following, the invention is illustrated using Figures without any intention to limit the scope of the invention. The Figures show:
Figure 1: Exemplary embodiment of the method 100 for determining a level of confidence 4 of a response 3 that an artificial intelligence/machine learning model, Al/ML model 2, delivers in response to a given query 1;
Figure 2: Exemplary dependence of confidence levels 4, *γ_{query}* on values of a decision function *f_{DF}* of a classifier that decides whether a representation 3 of a query 1 is within the DOV 9;
Figure 3: Exemplary domain of validity for words relating to animals;
Figure 4: Exemplary adjustment of the DOV 9 based on user feedback on queries 1 with representations 5 outside the DOV 9: original state of the DOV 9 (Figure 4a) and adapted (here: extended) state after feedback consideration (Figure 4b).

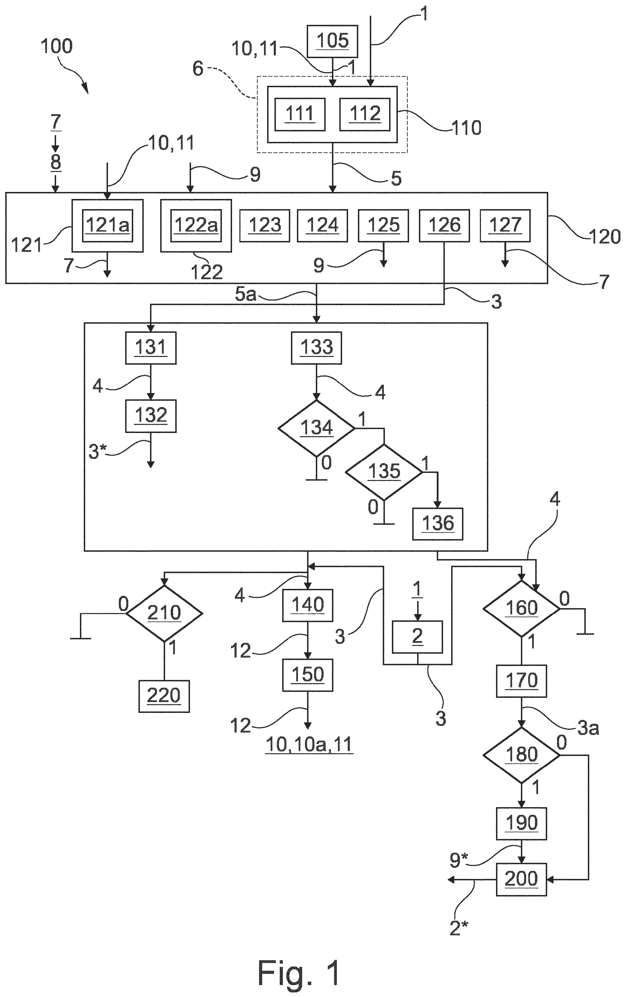

Figure 1 shows a schematic flow chart of an embodiment 100 for determining a level of confidence 4 of a response 3 that an artificial intelligence/machine learning model, Al/ML model 2, delivers in response to a given query 1.

According to block 105, the query 1 may relate to at least one property of at least one industrial asset 11 in an industrial plant 10, and/or of an industrial process executed on this industrial plant 10.

In step 110, a representation 5 of the query 1 in a working space 6 is obtained.

According to block 111, a space used by the Al/ML model 2 during the processing of the query 1 into the response 3, and/or a lower-dimensional space accessible from such space by projection, may be chosen as the working space 6.

According to block 112, a space of Al/ML model -processable tensor representations of text and/or image inputs, and/or a lower-dimensional space accessible from such space by projection, may be chosen as the working space 6.

In step 120, a closeness 5a of this representation 5 to one or more reference representations 8 of reference inputs 7 that are known to belong to a domain of validity, DOV 9, and/or to this DOV 9 as a whole, is determined.

According to block 121, the reference inputs 7 may comprise
- training examples that were used to train the Al/ML model 2, and/or
- user-supplied examples from a domain and/or distribution to which the query 1 relates, and/or
- context information that the Al/ML model 2 uses when producing the response 3 to the query 1.

In particular, according to block 121a, the user-supplied examples, and/or the context information, may comprise technical documentation relating to least one industrial asset 11 in the industrial plant 10, and/or to the industrial plant 10 as a whole.

According to block 122, the closeness 5a to the DOV 9 may be determined based at least in part on a classification score of a classifier that is configured to classify whether an inputted representation belongs to the DOV 9. In particular, according to block 122a, the classifier may be chosen to be trained at least in part on reference inputs 7.

According to block 123, the determining of the closeness 5a to the DOV 9 may comprise determining whether the representation 5 of the query 1 is a member of a cluster that is known to belong, or not to belong, to the DOV 9.

According to block 124, the determining of the closeness 5a to the DOV 9 may comprise pre-selecting a subset of the reference representations 8 with which to compare the representation of the query.

According to block 125, the DOV 9 is chosen 125 to comprise representations of documents with sensitive information. As it will be discussed later, this allows to check whether the AI/ML model is likely to disclose this sensitive information to a user issuing the query 1.

According to block 126, one and the same query 3 may be processed by multiple Al/ML models 2 into respective responses 3, so as to evaluate these responses 3 by means of their respective confidence levels 4.

According to block 127, the reference inputs 7 may be chosen to relate to one particular class of a given classification, thereby allowing to make the determined confidence level 4 class-specific.

In step 130, the level of confidence 4 is determined based at least in part on the closeness 5a determined in step 120.

According to block 131, after one and the same query 3 has been processed by multiple Al/ML models 2 into respective responses 3 according to block 126, a level of confidence 4 may be determined for each such response 3. According to block 132, a final response 3* to the query 1 may then be selected and/or aggregated from the multiple responses 3 based on the respective levels of confidence 4.

According to block 133, confidence levels 4 may be determined with respect to multiple classes. According to block 134, it may then be checked whether the confidence levels 4 with respect to classes that the user submitting the query 1 has access rights to are above a first predetermined threshold. It may also be checked, in sequence or concurrently, according to block 135, the confidence levels 4 with respect to classes that this user has no access rights to are below a second predetermined threshold. If both conditions are fulfilled (i.e., both truth values are 1), according to block 136, the release of the response 3 to the user may be approved

In step 140, an actuation signal 12 may be computed from the response 3 that the Al/ML model 2 has computed based on the query 1. Based at least in part on the actuation signal 12, in step 150, at least one industrial asset 11 in an industrial plant 10 may be actuated, and/or another physical influence may be exerted on an industrial process 10a executed by the industrial plant 10. This may optionally gated by any suitable condition based on the confidence level 4. That is, if the confidence level 4 falls short of a predetermined criterion for acceptance, and/or fulfils a predetermined criterion for refusal, the computation and/or use of the actuation signal 12 may be suppressed.

In step 160, it may be determined whether the level of confidence 4 is lower than a predetermined threshold. If this is the case (truth value 1), in step 170, feedback 3a whether the response 3 provided by the Al/ML model 2 is correct may be obtained. In step 180, it may then be checked whether this feedback 3a indicates that the response is correct. If this is the case (truth value 1), it may then be determined, in step 190, that the representation 5 of the query 3 belongs to the DOV 9. The result is an extended DOV 9*.

In any case, in step 200, the AI/ML model 2 may be re-trained with the query 1 as new training example. A ground truth label assigned to this new training example may comprise feedback 3a whether the response 3 provided by the Al/ML model 2 to this query 1 is correct.

In step 210, in a use case where the DOV 9 is chosen to comprise representations of documents with sensitive information according to block 125, it may be determined whether the level of confidence 4 with respect to this DOV 9 exceeds a predetermined threshold. If this is the case (truth value 1), in step 120, it may be determined that the Al/ML model 2 has a propensity to disclose sensitive information in the response 3.

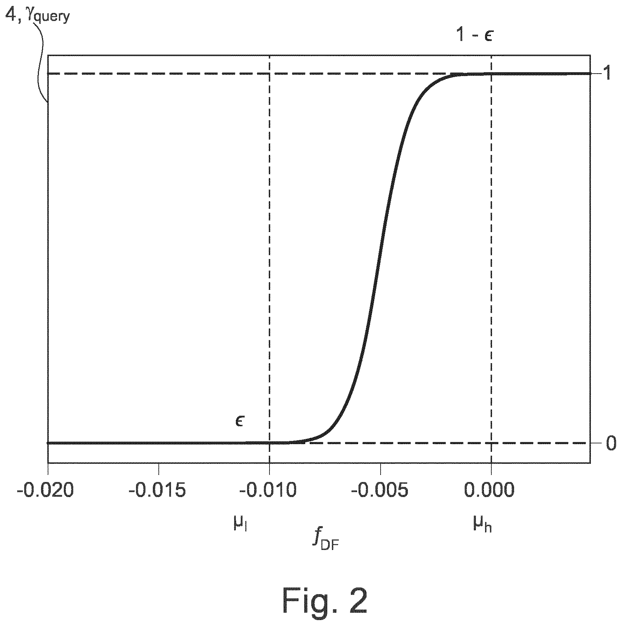

Figure 2 shows how a confidence level 4 (also labelled *γ_{query}*) for a query 1 may be determined based on values of a decision function *f_{DF}* of a classifier that decides whether a representation 5 of the query 1 is within the DOV 9. In the example shown in Figure 2, the classifier is a one-class support vector machine, SVM, that has been trained on reference representations 8 generated from reference inputs 7. The reference inputs 7 are inputs for which it is known, or can be at least reasonably expected, that the Al/ML model 2 can produce correct responses. By virtue of this, the reference representations 8 are known to belong to the DOV 9.

The projection Emb_{query}, 5 of a user query 1 in a space of embeddings used by the AI/ML model 2 as working space 6 belongs to the DOV 9 of the embeddings of the Al/ML model training data or the embeddings of the user defined documents as reference representations 8 if the output of the decision function *f_{DF}* of the employed classifier is greater than or equal to the threshold µₕ (such threshold is 0 in case of a one-class SVM). As a result, the confidence level *γ_{query},* 4 of the response 3 of the AI/ML model 2 should be close to 1. On the other hand, the output of the decision function *f_{DF}* of the employed classifier will be less than the threshold µₕ if the projection Emb_{query}, 5 of a user query 1 in the embedding space 6 doesn't belong to the DOV 9 of the embeddings of the generative Al model training data or the embeddings of the user defined documents as reference representations 8. In this case, the resulted confidence level *γ_{query}* of the generative Al model response will be lower than 1. *γ_{query}* will be too close to 0 when the output of the decision function *f_{DF}* of the employed classifier is significantly less than the threshold µₗ.

The confidence level *γ_{query}* is computed based on the output of the decision function f_{DF} of the used classifier, where *γ_{query}* is calculated using the following confidence scoring function Γ_{Gen AI-DOV}: $\begin{matrix}{γ}_{query} = {Γ}_{Gen AI - DOV} \left({Emb}_{query}\right) = {\left(1+exp\left(c\times \left({f}_{DF}\left({Emb}_{query}\right)-{μ}_{h}\right)+ln\left(\frac{ϵ}{1 - ϵ}\right)\right)\right)}^{- 1} , \\ c = \frac{2}{{μ}_{l}} ln \left(\frac{1 - ϵ}{ϵ}\right) ,\end{matrix}$ where Emb_{query} is the embedded input of the user query and f_{DF} is the decision function of the employed classifier. µₗ E R and $ϵ ∈ ℝ$ are the tuning parameters of Γ_{Gen AI-DOV}. The confidence level *γ_{query},* 4 is equal to ε if the value of the decision function f_{DF} of a classifier is equal to µₗ. If the decision function f_{DF} of the classifier equals to *µ*ₕ, the confidence level *γ_{query},* 4 is equal to the 1-ε which represents the maximum attainable confidence level. The parameter µₗ needs to be determined based on the values of the decision function f_{DF} of the classifier for the embeddings of the generative Al model training data or the embeddings of the user defined documents as reference representations 8. This parameter also reflects how much we trust the generality of the generative Al model. The function F_{Gen AI-DOV} is a sigmoid function, where the interval of the attainable values of the confidence level *γ_{query}* is: *ε* ≤ *γ_{query}* ≤ 1 *- ε.* In the graphical representation of the function Γ_{Gen AI-DOV} that is given in Figure 2, the tuning parameters are: ε = 10⁻³, µₗ = -10⁻² and µ**ₕ** = 0.

For the sake of visualizing the computed DOV of the generative Al model, the embeddings of the generative Al model training data or the embeddings of the user defined documents can be first projected to a lower dimension space using a feature extraction method such as Principal Component Analysis (PCA), t-Distributed Stochastic Neighbor Embedding (t-SNE), and Linear Discriminant Analysis (LDA). The boundary of the lower-dimensional embeddings is determined by training a classifier such as a one-class SVM. In this case the confidence level *γ_{query}* of the generative Al model is computed as follows: $\begin{matrix}{γ}_{query} = {Γ}_{Gen AI - DOV} \left({Emb}_{query}\right) = {\left(1+exp\left(c\times \left({f}_{DF}\left({f}_{red}\left({Emb}_{query}\right)\right)-{μ}_{h}\right)+ln\left(\frac{ϵ}{1 - ϵ}\right)\right)\right)}^{- 1} , \\ c = \frac{2}{{μ}_{l}} ln \left(\frac{1 - ϵ}{ϵ}\right) ,\end{matrix}$ where the function f_{red} projects the original embeddings of the generative Al model training data or the embeddings of the user defined documents into a lower dimensional space which enables better visualization of the DOV 9 of the AI/ML model 2.

After deployment of the Al system, the user can validate that the resulted output (response) 3 of the Al system is correct despite that the user query/input 1 does not belong to the estimated DOV 9 of the AI/ML model 2. In this case, the user feedback is taken in consideration and the DOV 9 of the AI/ML model 2 will be adapted/extended to include the embeddings (representation) 5 of the tested user input 1. Accordingly, the confidence level of the model 2 for future similar inputs to that of the user query 1 will be accompanied by high confidence levels. This may therefore be regarded as an online adaptation of the DOV.

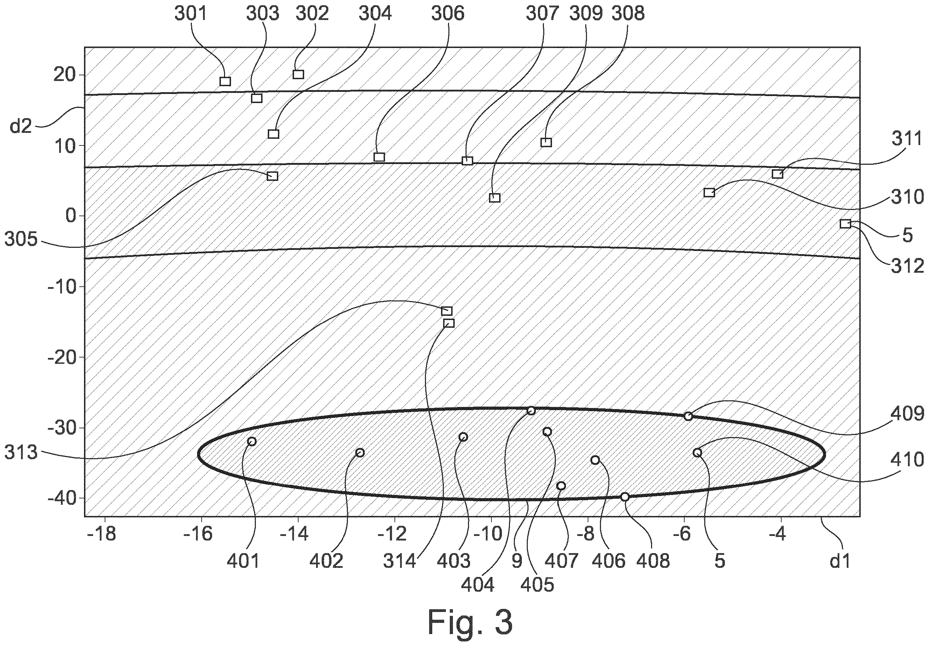

Figure 3 illustrates the implementation and the advantages of the proposed DOV based approach on a simple case study. We used a GloVe-based dictionary of pre-trained word vectors generated by the Global Vectors for Word Representation (GloVe) machine learning algorithm for obtaining vector representations for words. This dictionary includes the embeddings of 400K words, where we aim at estimating the domain of validity (DOV) of the embeddings of the words representing the available animal names.

In this example, we first reduced the dimensionality of the word embeddings from 50D to 2D using the t-SNE algorithm to enable the visualization of the estimated DOV. A one-class SVM with an RBF kernel is used in this case to estimate the DOV by determining the boundaries of the regions densely covered by the 2D projections of the embeddings of the animal words. The user query 1 is also embedded and projected along with the training data using the t-SNE into the same 2D space. In this case study, we select the user query 1 randomly from the available 400K words in the GloVe-based dictionary. We then obtained the corresponding embedding vector Emb_{query}, 5 which is already computed and stored in the dictionary. In this case the confidence level *γ_{query},* 4 of the AI/ML model 2 is computed as follows: $\begin{matrix}{γ}_{query} = {Γ}_{Gen AI - DOV} \left({Emb}_{query}\right) = {\left(1+exp\left(c\times {f}_{DF}\left({f}_{red}\left({Emb}_{query}\right)\right)+ln\left(\frac{ϵ}{1 - ϵ}\right)\right)\right)}^{- 1} , \\ c = \frac{2}{{μ}_{l}} ln \left(\frac{1 - ϵ}{ϵ}\right) ,\end{matrix}$ where f_{red} is the t-SNE function for reducing the dimension of the user query Emb_{query}. The tuning parameters of Γ_{Gen AI-DOV} are selected as: ε = 10⁻³, µₗ = -10⁻¹ and µₕ = 0. The RBF kernel used in the one-class SVM and is defined by *k*(*x, y*) = exp(-γ∥*x* - *y*∥²), where the tuning parameter y is selected as 10⁻⁴.

We investigated the determined DOV using several test words related and unrelated to animals. Figure 3 shows, in two dimensions d1 and d2, the estimated DOV 9 of a set of animals' names in the GloVe-based dictionary and also the confidence levels corresponding to the test words. All the animal names
- tiger 401,
- horse 402,
- dog 403,
- rat 404,
- bat 405,
- elephant 406,
- sheep 407,
- cow 408,
- mouse 409 and
- lion 410,

whose representations 5 are marked with circles, scored high confidence levels above 0.99 as they belong to the estimated DOV 9. The other terms
- employee 301,
- employer 302,
- worker 303,
- elderly 304,
- people 305,
- children 306,
- child 307,
- adult 308,
- human 309,
- person 310,
- patient 311,
- man 312,
- ronaldo 313, and
- messi 314
related to humans, whose representations 5 are marked with squares, scored very low confidence levels as they are far away from the estimated DOV 9 of the animals' names.

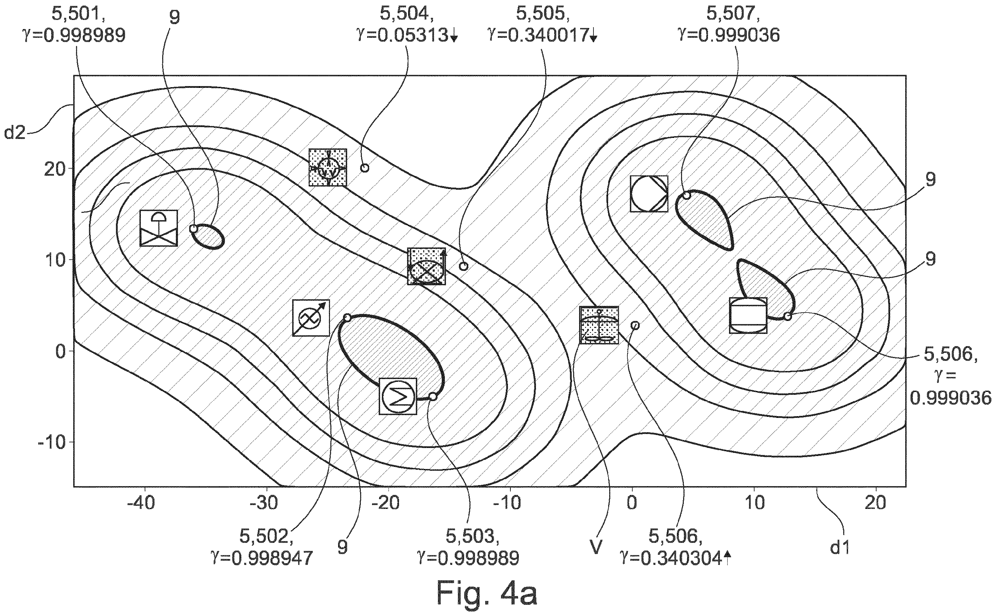

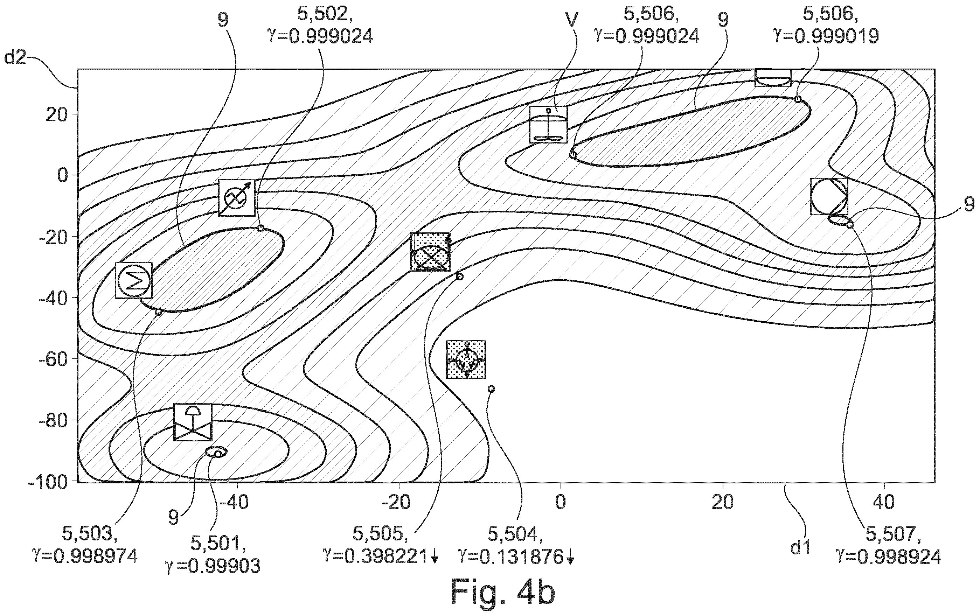

Figure 4 illustrates show the capability of the developed scheme to estimate the domain of validity, DOV 9, of AI/ML model 2 on another case study with images, e.g., symbols from P&ID documents, as inputs. This demonstrates the versatility of this DOV estimation approach for determining the trust regions of any ML model with any sort of inputs.

In this example, we estimate the DOV of a ResNet-18 model. The pretrained version of the ResNet-18 is a convolutional neural network developed to classify images into 1000 object categories. We consider a finetuned ResNet-18 in this case trained to perform classifications of symbols in P&IDs from specific customers. Then a user can use the Al model to automatically classify the symbols in a certain P&ID.

The proposed approach was employed to estimate the DOV 9 of the model 2 by first reducing the dimensionality of the embeddings of the Res-Net-18 model. We employed the t-SNE approach to lower the embeddings' dimension from 512 to 2. A one-class SVM with RBF kernel is then trained using the lower dimensional projections of the embeddings 5 to estimate the boundaries of the lower dimensional projections of the embeddings 5. In this case the confidence level *γ_{image}*, 4 of the Al model 2 is computed based on the embedding Emb_{image} of the respective image as follows: $\begin{matrix}{γ}_{query} = {Γ}_{Res - Net - DOV} \left({Emb}_{image}\right) = {\left(1+exp\left(c\times {f}_{DF}\left({f}_{red}\left({Emb}_{image}\right)\right)+ln\left(\frac{ϵ}{1 - ϵ}\right)\right)\right)}^{- 1} , \\ c = \frac{2}{{μ}_{l}} ln \left(\frac{1 - ϵ}{ϵ}\right)\end{matrix}$

The tuning parameters of Γ_{Res-Net-DOV} are selected as: ε = 10⁻³, µₗ = -10⁻¹ and µₕ = 0. The RBF kernel used in the one-class SVM and is defined by *k*(*x, y*) = exp(-*γ*∥*x* - *y*∥²), with y selected as 10⁻².

Figure 4a shows the estimated DOV 9 of the model 2 as well as 8 different P&ID symbols whose positions in Figure 4a correspond to their representations 5 in the reduced space of embeddings spanned by the two dimensions d1 and d2. In the example shown in Figure 4a, the DOV 9 is not one single contiguous area; rather, it comprises several disjoint areas. The representations 5 belong to the classes
- control valve 501,
- condenser 502,
- heat exchanger 503,
- compressor 504,
- lamp 505,
- vessel 506 and
- pump 507.

The representations 5 of five symbols (with clear background) belong to the DOV of the fine-tuned Res-Net-18 model, and the representations 5 of the remaining symbols (with shaded background) do not belong to the DOV 9 of the model 2, as those symbols have not been included in the training data of the model 2. The proposed confidence scoring function resulted in high confidence levels 4, y for the P&ID symbols belonging to the DOV 9 of the model and led to lower confidence levels scores 4, y for the other symbols which were not seen in the training data set of the model 2. Hence, on the one hand, this tool can be very helpful in supporting the user to assess how confident he/she can be regarding the classification result of the model.

**On the other** hand, these out-of-distribution data points (marked with shaded backgrounds) may explicitly trigger the human expert to provide efficient and effective feedback, e.g., by providing additional labels to these data points. This feedback is also shown in Figure 4a. Responses 3 of the model 2 are marked with an upward arrow (↑) if they were found to be correct, and with a downward arrow (↓) if they were found not to be correct, according to the expert feedback.

The classifications of two symbols were wrong. However, the classification for the image of a vessel (labelled V) was true despite that this symbol was not included in the training data. The reason behind that this vessel symbol looks very similar to the vessel symbol included in the training data. As a result, based on the user feedback, the model can efficiently be re-trained under consideration of these additional expert-provided data points.

Figure 4b shows the result of an adaptation (here: an extension) of the DOV 9 of the Al/ML model 2 based on the feedback that the Al/ML model 2 produced a correct response for the image of a vessel (labelled V) that looked different from a vessel seen during training. The confidence levels 4, y have been determined in the same manner as for Figure 4a.

By virtue of said image V of a vessel having been included in the DOV 9, this image is now getting a much larger confidence level. For this effect to appear, it is not even necessary to include this image in a further training dataset for fine-tuning the Al/ML model 2. This saves computation time during fine-tuning or other re-training.

### List of reference signs:

- 1: query submitted by a user
- 2: artificial intelligence/machine learning model, Al/ML model
- 2*: re-trained state of AI/ML model 2
- 3: response of the Al/ML model 2 to the query 1
- 3*: final response aggregated/selected from multiple responses 3
- 3a: user feedback on response 3
- 4, y: level of confidence for response 3
- 5: representation of query 1 in working space 6
- 6: working space, e.g., embedding space
- 7: reference inputs that AI/ML model 2 is known to be familiar with
- 8: reference representations of reference inputs 7 known to be in DOV 9
- 9: domain of validity, DOV
- 10: industrial plant
- 10a: industrial process executed on industrial plant 10
- 11: industrial asset in industrial plant 10
- 12: actuation signal
- 100: method for determining confidence level 4
- 105: choosing query 1 relating to industrial plant 10, process 10a, assets 11
- 110: obtaining representation 5 of query 1
- 111: choosing space used by model 2, or lower-dim. space, as working space 6
- 112: choosing space of Al/ML model tensor representations as working space 6
- 120: determining closeness 5a to DOV 9 and/or reference representations 8
- 121: choosing particular kinds of reference inputs 7
- 121a: choosing technical documentation as reference inputs 7
- 122: determining closeness 5a based on classification score
- 122a: choosing classifier trained on reference inputs 7
- 123: determining closeness 5a using clusters
- 124: pre-selecting subset of reference representations 8
- 125: choosing DOV 9 to relate to sensitive information
- 126: processing query 1 by multiple AI/ML models 2
- 127: choosing class-specific reference inputs 7
- 130: determining level of confidence 4 based on closeness 5a
- 131: determining confidences 4 for responses 3 from multiple AI/ML models 2
- 132: determining final response 3* from multiple responses 3
- 133: determining confidence levels 4 with respect to multiple classes
- 134: checking whether confidences 4 for access-OK classes are high
- 135: checking whether confidences 4 for access-not-OK classes are low
- 136: approving release of response 3 to the user
- 140: computing actuation signal 12
- 150: actuating plant 10, asset 10, process 10a with actuation signal 12
- 160: determining whether confidence level 4 below threshold
- 170: obtaining feedback 3a
- 180: determining whether feedback 3a indicates correct response
- 190: determining that query 3 representation 5 belongs to DOV 9
- 200: re-training AI/ML model 2
- 210: determining whether confidence 4 for sensitive DOV 9 above threshold
- 220: determining that propensity to disclose sensitive information is present
- 301: employee as example outside DOV 9
- 302: employer as example outside DOV 9
- 303: worker as example outside DOV 9
- 304: elderly as example outside DOV 9
- 305: people as example outside DOV 9
- 306: children as example outside DOV 9
- 307: child as example outside DOV 9
- 308: adult as example outside DOV 9
- 309: human as example outside DOV 9
- 310: person as example outside DOV 9
- 311: patient as example outside DOV 9
- 312: man as example outside DOV 9
- 313: ronaldo as example outside DOV 9
- 314: messi as example outside DOV 9
- 401: tiger as example in DOV 9
- 402: horse as example in DOV 9
- 403: dog as example in DOV 9
- 404: rat as example in DOV 9
- 405: bat as example in DOV 9
- 406: elephant as example in DOV 9
- 407: sheep as example in DOV 9
- 408: cow as example in DOV 9
- 409: mouse as example in DOV 9
- 410: lion as example in DOV 9
- 501: control valve as class
- 502: condenser as class
- 503: heat exchanger as class
- 504: compressor as class
- 505: lamp as class
- 506: vessel as class
- 507: pump as class
- V: image of vessel

## Claims

1. A computer-implemented method (100) for estimating a level of confidence (4) of a response (3) that an artificial intelligence/machine learning model, AI/ML model (2), delivers in response to a given query (1), comprising the steps of:
• obtaining (110) a representation (5) of the query (1) in a working space (6);
• determining (120) a closeness (5a) of this representation (5) to one or more reference representations (8) of reference inputs (7) that are known to belong to a domain of validity, DOV (9), of the AI/ML model (2), and/or to this DOV (9) as a whole;
• determining (130) the level of confidence (4) based at least in part on this closeness (5a);
• and in response to the level of confidence (4) being (160) lower than a predetermined threshold:
∘ obtaining (170) feedback (3a) whether the response (3) provided by the Al/ML model (2) is correct; and
∘ if this feedback (3a) indicates (180) that the response (3) is correct, determining (190) that the representation (5) of the query (3) belongs to the DOV (9),
wherein the query (1) relates (105) to at least one property of at least one industrial asset (11) in an industrial plant (10), and/or of an industrial process executed on this industrial plant (10).

2. The method (100) of claim 1, wherein the reference inputs (7) comprise (121)
• training examples that were used to train the AI/ML model (2), and/or
• user-supplied examples from a domain and/or distribution to which the query (1) relates, and/or
• context information that the AI/ML model (2) uses when producing the response (3) to the query (1).

3. The method (100) of any one of claims 1 to 2, wherein the user-supplied examples, and/or the context information, comprise (121a) technical documentation relating to at least one industrial asset (11) in the industrial plant (10), and/or to the industrial plant (10) as a whole.

4. The method (100) of any one of claims 1 to 3, further comprising:
• computing (140), from the response (3), an actuation signal (12); and
• actuating (150) at least one industrial asset (11) in an industrial plant (10), and/or otherwise exerting a physical influence on an industrial process (10a) executed by the industrial plant (10), based on the actuation signal (12).

5. The method (100) of any one of claims 1 to 4, wherein a space used by the Al/ML model (2) during the processing of the query (1) into the response (3), and/or a lower-dimensional space accessible from such space by projection, is chosen (111) as the working space (6).

6. The method (100) of any one of claims 1 to 5, wherein a space of Al/ML model-processable tensor representations of text inputs, image inputs, tabular or otherwise structured inputs, audio inputs, and/or video inputs, and/or a lower-dimensional space accessible from such space by projection, is chosen (112) as the working space (6).

7. The method (100) of any one of claims 1 to 6, wherein the closeness (5a) to the DOV (9) is determined (122) based at least in part on a classification score of a classifier that is configured to classify whether an inputted representation belongs to the DOV (9).

8. The method (100) of claim 7, wherein the classifier is chosen (122a) to be trained at least in part on reference inputs (7).

9. The method (100) of any one of claims 1 to 8, wherein the determining of the closeness (5a) to the DOV (9) comprises determining (123) whether the representation (5) of the query (1) is a member of a cluster that is known to belong, or not to belong, to the DOV (9).

10. The method (100) of any one of claims 1 to 9, wherein the determining of the closeness (5a) to the DOV (9) comprises pre-selecting (124) a subset of the reference representations (8) with which to compare the representation of the query.

11. The method (100) of any one of claims 1 to 10, further comprising: re-training (200) the AI/ML model (2) with the query (1) as new training example, wherein a ground truth label assigned to this new training example comprises feedback (3a) whether the response (3) provided by the AI/ML model (2) is correct.

12. The method (100) of any one of claims 1 to 11, wherein
• the DOV (9) is chosen (125) to comprise representations of documents with sensitive information, and
• in response to the level of confidence (4) exceeding (210) a predetermined threshold, determining (220) that the Al/ML model (2) has a propensity to disclose sensitive information in the response (3).

13. The method (100) of any one of claims 1 to 12, wherein
• one and the same query (1), and/or multiple queries (1) with similar information but in different formats, are processed (126) by multiple Al/ML models (2) into respective responses (3);
• a level of confidence (4) is determined (131) for each such response (3); and
• a final response (3*) to the query (1) is selected and/or aggregated (132) from the multiple responses (3) based on the respective levels of confidence (4).

14. The method (100) of any one of claims 1 to 13, wherein the reference inputs (7) are chosen (127) to relate to one particular class of a given classification.

15. The method (100) of any one of claims 1 to 14, wherein
• confidence levels (4) are determined (133) with respect to multiple classes; and
• in response to the confidence levels (4) with respect to classes that the user submitting the query (1) has access rights to being (134) above a first predetermined threshold, and the confidence levels (4) with respect to classes that this user has no access rights to being (135) below a second predetermined threshold, the release of the response (3) to the user is approved (136).

16. A computer program, comprising machine-readable instructions that, when executed by one or more computers and/or compute instances, causes the one or more computers to perform the method (100) according to any one of claims 1 to 15.

17. A non-transitory machine-readable data carrier, and/or a download product, with the computer program of claim 16.

18. One or more computers and/or compute instances with the computer program of claim 16, and/or with the machine-readable data carrier and/or download product of claim 17.
